# EUROPEAN PATENT APPLICATION

(11) **EP 4 513 879 A1**
(43) Date of publication of application: **26.02.2025**
(21) Application number: 24185326.6
(22) Date of filing: 28.06.2024
(51) Int. Cl.: H04N 21/439, H04N 5/60, H04N 21/45, H04N 21/472, H04N 21/485

(54) **AN ELECTRONIC DEVICE COMPRISING AN ON-SCREEN SOUND LEVEL BAR AND THE CONTROL METHOD THEREOF**

(30) Priority: 22.08.2023 TR 202310185
(71) Applicant: Arçelik Anonim Sirketi, 34445 Istanbul (TR)
(72) Inventor: KILICKAYA, ALI BEKIR, 34445 ISTANBUL (TR); DEMIREL, IBRAHIM, 34445 ISTANBUL (TR)

(57) **Abstract**

The present invention relates to an electronic device (1) comprising at least one screen (2); and a control unit (3) where the noise level limit values are stored, and which compares the sound emitted from the monitored media environment with the noise level limit values according to the time of day and which provides that at least one sound level bar (4) is displayed on the screen (2), which comprises appropriate sound level limits according to the time of day.

## Description

The present invention relates to an electronic device comprising a sound level bar in a sound menu on the screen, and the control method thereof.

Electronic devices such as television, satellite receiver, camera, video camera, etc. have an on-screen sound menu to adjust the sound parameter as per user preference. The sound level bar in the sound menu appears on the screen in line with the command given when the user wants to make the adjustment, and disappears from the screen after the adjustment process is completed.

Especially when listening to content on the television, since it is not known what sound level should remain at a safe level, problems arise such as the sound traveling out of the environment where the television is located, for example and reaching a neighbor.

In the state of the art, televisions and some electronic devices with audio playback feature have options such as night mode, AVL (auto volume control) and hotel mode. However, said embodiments do not provide information about what sound level is safe. Moreover, said embodiments do not include the function of operating in accordance with noise regulations depending on the user's location. Furthermore, some of said embodiments do not control the output volume or only limits the maximum volume.

In the state of the art European Patent Application No. EP2391004, the sound level is limited.

The state of the art European Patent Application No. EP4133997 discloses the adjustment of the sound level by means of sensors.

In the state of the art United States Patent Application No. US10951188, the adjusted sound level is displayed on the screen.

The aim of the present invention is the realization and control of an electronic device having a screen whereon the safe sound level is displayed on the sound level bar.

The electronic device realized in order to attain the aim of the present invention, explicated in the first claim and the respective claims thereof, comprises at least one screen; and a control unit where the noise level limit values are stored, and which compares the sound emitted from the monitored media environment with the noise level limit values according to the time of day and which provides that at least one sound level bar is displayed on the screen, which comprises appropriate sound level limits according to the time of day.

In an embodiment of the present invention, the noise level limit values are determined based on the location information. The location information can be geographical information or can comprise the location information of the rooms within the building. In this embodiment of the present invention, the location information is provided automatically by the manufacturer or the electronic device.

In an embodiment of the present invention, the broadcast standard is also stored in the control unit according to the location information.

In the embodiment of the invention, the noise level limit values are stored in the control unit according to the location information. According to the location information, the broadcast standard (HDMI, ATV, DTV, Streaming, etc.) is also stored in the electronic device. By performing a calibration process between broadcasts at different frequencies and different sound levels on the electronic device, data is obtained at what level sound will be produced according to different broadcasting and broadcasting standards as well as depending on the location of the electronic device. By comparing the sound data of the broadcast instantly followed by the user with the calibration data, at what level the sound will be produced by the electronic device is calculated, and by analyzing the monitored broadcast according to the determined noise level limit values, it is estimated at what level the sound will be produced by the electronic device. Depending on the time the broadcast is watched, the appropriate sound level is displayed on the sound level bar on the screen, together with safe, risky and dangerous limit values.

In an embodiment of the present invention, the noise level limit values and the values calculated accordingly are displayed on the screen as information.

By means of the present invention, the user is shown on the screen the information on the sound level of the broadcast to be watched by the user depending on the noise level limit values according to the time and location. Thus, generating noise in the environment is prevented and broadcasts can be followed at a safe sound level.

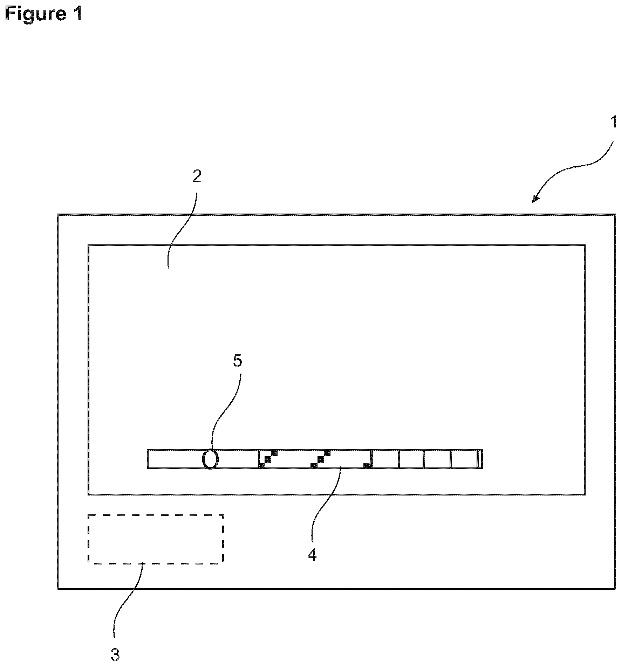

Figure 1 - is the schematic view of the electronic device.
1. Electronic device
2. Screen
3. Control unit
4. Sound level bar
5. Indicator

The electronic device (1) of the present invention comprises at least one screen (2); and a control unit (3) where the noise level limit values are stored, and which compares the sound emitted from the monitored media environment with the noise level limit values according to the time of day and which provides that at least one sound level bar (4) is displayed on the screen (2), which comprises appropriate sound level limits according to the time of day (Figure 1).

In an embodiment of the present invention, the electronic device (1) comprises the control unit (3) which automatically determines the noise level limit values according to the location information.

In another embodiment of the present invention, the electronic device (1) comprises the control unit (3) wherein the noise level limit values according to the location information are stored by the manufacturer.

In the embodiment of the present invention, the electronic device (1) comprises the control unit (3) which has geographical information or location information of the rooms within the building as the location information.

In an embodiment of the present invention, the electronic device (1) comprises the control unit (3) wherein the broadcast standard according to the location information is stored by the manufacturer.

In the embodiment of the present invention, the noise level limit values and the broadcast standard (HDMI, ATV, DTV, Streaming, etc.) are stored in the control unit (3) according to the location information. By performing a calibration process between broadcasts at different frequencies and different sound levels on the electronic device (1), data is obtained at what level sound will be produced according to different broadcasting and broadcasting standards as well as depending on the location of the electronic device (1). By comparing the sound data of the broadcast instantly followed by the user with the calibration data, at what level the sound will be produced by the electronic device (1) is calculated, and by analyzing the monitored broadcast according to the determined noise level limit values, it is estimated at what level the sound will be produced by the electronic device (1). Depending on the time the broadcast is watched, the appropriate sound level is displayed on the sound level bar on the screen (2), together with safe, risky and dangerous limit values.

In an embodiment of the present invention, the electronic device (1) comprises the control unit (3) which enables the noise level limit values and the values calculated accordingly to be displayed on the screen (2) as information.

In another embodiment of the present invention, the electronic device (1) comprises an indicator (5) which is provided on the sound level bar (4) and which shows the current sound level.

In another embodiment of the present invention, the electronic device (1) comprises a sound level bar (4) where the safe sound level, risky sound level and noise sound level determined according to the noise level limit values are displayed. In this embodiment of the present invention, the safe sound level is shown in green, the risky sound level in orange and the noise sound level in red. In this embodiment of the present invention, the color of the indicator (5) is the color of the sound level the same is on.

The control method for the electronic device (1) of the present invention comprises the steps of storing the noise level limit values and the broadcast standard according to location information; performing the calibration process between broadcasts at different frequencies and different sound levels; obtaining data of at what level sound will be produced according to different broadcasting and broadcasting standards as well as depending on the location; comparing the sound data of the broadcast instantly followed by the user with the calibration data and calculating at what level sound will be produced by the electronic device (1); and by analyzing the noise level of the broadcast being watched according to its limit values and by predicting at what level sound will be produced by the electronic device (1), displaying the appropriate sound level on the sound level bar on the screen (2), together with safe, risky and dangerous limit values depending on the time the broadcast is watched.

By means of the present invention, the user is shown on the screen (2) the information on the sound level of the broadcast to be watched by the user depending on the noise level limit values according to the time and location. Thus, generating noise in the environment is prevented and broadcasts can be followed at a safe sound level.

## Claims

1. An electronic device (1) **characterized by** at least one screen (2); and a control unit (3) where the noise level limit values are stored, and which compares the sound emitted from the monitored media environment with the noise level limit values according to the time of day and which provides that at least one sound level bar (4) is displayed on the screen (2), which comprises appropriate sound level limits according to the time of day.

2. An electronic device (1) as in Claim 1, **characterized by** the control unit (3) which automatically determines the noise level limit values according to the location information.

3. An electronic device (1) as in Claim 1, **characterized by** the control unit (3) wherein the noise level limit values according to the location information are stored by the manufacturer.

4. An electronic device (1) as in Claim 2 or Claim 3, **characterized by** the control unit (3) which has geographical information or location information of the rooms within the building as the location information.

5. An electronic device (1) as in Claim 1, **characterized by** the control unit (3) wherein the broadcast standard according to the location information is stored by the manufacturer.

6. An electronic device (1) as in any one of the above claims, **characterized by** the control unit (3) which enables the noise level limit values and the values calculated accordingly to be displayed on the screen (2) as information.

7. An electronic device (1) as in any one of Claims 1 to 6, **characterized by** an indicator (5) which is provided on the sound level bar (4) and which shows the current sound level.

8. An electronic device (1) as in Claim 7, **characterized by** a sound level bar (4) where the safe sound level, risky sound level and noise sound level determined according to the noise level limit values are displayed.

9. A control method for the electronic device (1) **comprising** the steps of storing the noise level limit values and the broadcast standard according to location information; performing the calibration process between broadcasts at different frequencies and different sound levels; obtaining data of at what level sound will be produced according to different broadcasting and broadcasting standards as well as depending on the location; comparing the sound data of the broadcast instantly followed by the user with the calibration data and calculating at what level sound will be produced by the electronic device (1); and by analyzing the noise level of the broadcast being watched according to its limit values and by predicting at what level sound will be produced by the electronic device (1), displaying the appropriate sound level on the sound level bar on the screen (2), together with safe, risky and dangerous limit values depending on the time the broadcast is watched.
